# EUROPEAN PATENT APPLICATION

(11) **EP 2 977 602 A2**
(43) Date of publication of application: **27.01.2016**
(21) Application number: 15174178.2
(22) Date of filing: 26.06.2015
(51) Int. Cl.: F02M 35/10, F02D 9/02, F02D 9/10, F02D 9/12, F02D 9/16, F02M 29/10, F02B 27/02

(54) **INTAKE MANIFOLD HAVING VARIABLE DIAMETERS**

(30) Priority: 04.07.2014 TW 103211933
(71) Applicant: Hanking Power Technology Co., Ltd., Changhua County 525 (TW)
(72) Inventor: Chuang, Tzu-Nan, 525 Changhua County (TW)
(74) Representative: Lang, Christian

(57) **Abstract**

An intake manifold (100) having variable diameters is provided. The intake manifold (100) includes a tube body (110) and a valve (120) . The valve is rotatably disposed in the tube body (110), wherein the valve (120) is a hollow-ring and comprises an outer circumference (122) and an inner circumference (121), and a gradient curve surface (123) is formed from the outer circumference (122) to the inner circumference (121). The inner circumference (121) defines a inlet face (A2), and a gradually varied angle is formed between a normal vector (T2) of the inlet face (A2) and a cross section (A1) at an end of the tube body (110) while the valve (120) rotates.It is also provided an intake manifold (200) having variable diameters. The intake manifold (200) includes a tube body (210) and a valve (220). The valve is composed of two hollow rings (221, 222), wherein the two hollow rings (221, 222) overlap along a central axis (X) of the tube body (210) and relatively rotate to each other around the central axis (X). Each of the two hollow rings (221, 222) comprise an inner circumference (221a) and an outer circumference (221b), a plurality of air holes (223, 224) having corresponded positions are formed between each of the inner circumference (221a) and each of the outer circumference (221b), and each of the inner circumference (221a) defines a inlet face (B1, B2). When the two hollow rings (221, 222) relatively rotate to a first position, the air holes (223, 224) of the two hollow rings (221, 222) are overlapped and through with each other; when the two hollow rings (221, 222) relatively rotate to a second position, the air holes (223, 224) of the two hollow rings (221, 222) are partially blocked with each other; and when the two hollow rings (221, 222) relatively rotate to a third position, the air holes (223, 224) of the two rings (221, 222) are completely blocked with each other.

## Description

### BACKGROUND

### Technical Field

The present disclosure relates to an intake manifold. More particularly, the present disclosure relates to an intake manifold having variable diameters.

### Description of Related Art

An internal combustion engine is used to transfer the fuel (e.g. gasoline) to mechanical energy to operate an engine. A complete process of transferring the fuel to mechanical energy is called engine cycle. The operation of the engine commonly includes a plurality of engine cycles.

An engine cycle generally includes four strokes: intake, compression, power transformation and exhaust. Intake is for generating suction by the pressure difference of the atmosphere. An air is filtered, and the filtered air is sucked by the suction; then the filtered air is mixed with a gasoline jetted by a nozzle in a cylinder block. Compression is for compressing the mixed gasoline in the cylinder block. Power transformation is for burning the mixed gasoline to expand the volume thereof, thereby pushing the piston to generate mechanical energy. Exhaust is for exhaling the waste gasoline from the cylinder block.

For increasing the performance of the cylinder block, the burning efficiency of the gasoline should be increased. Therefore, it is very important to control the air flow.

In a conventional injection type internal combustion engine, the open level of the intake gate is increased with the pressing amount of the accelerator pedal. Larger pressing amount of the accelerator pedal, higher open level of the intake gate, and larger amount of the sucked air. When the amount of the sucked air is larger, an air flow sensor is used to detect the air flow, and the detecting results will be transferred to a gasoline-injecting controlling system, then more amount of gasoline will be injected to increase air-fuel ratio, thereby the efficiency of the internal combustion engine will be increased. However, the conventional air flow sensor has time error from detecting to sensing so that the detecting data is not accurate. Thus, the amount of real air flow will be smaller than the amount that is required to be mixed with the gasoline. Moreover, a time error will also be occurred when the air flows in, thereby lowering air-fuel ratio. The aforementioned situation is usually occurred when a vehicle starts from a rest state or starts from a lower vehicle speed to a higher vehicle speed. When the accelerator pedal is pressed to increase the vehicle speed, the vehicle will be tremble or the vehicle will be stuck. Furthermore, in an environment having thin air, the amount of the air flow is not enough, therefore air-fuel ratio is low, and thus the power of the inner combustion engine is low, thereby lowering the climbing ability of the vehicle.

A turbo boost type inner combustion engine has been reached in the market. The operation principle of the boost type inner combustion engine is to use the waste air to drive the turbine blade, and the air compressor disposed in one end of the turbine axis is used to compress the air that enters in, then the compressed air is provided to the inner combustion engine for burning. However, this type of inner combustion engine still has advantages: first, the pressure of the waste air should be large enough to push the turbine blade; second, the waste air is used as an air source, but the waste air usually has very high temperature, and cannot be used to increase air-fuel ratio. Therefore, the turbocharger of the turbo-boost type inner combustion engine will decrease the power output and is not suitable for equipping in a general vehicle.

An improved inner combustion engine is disclosed in TW Patent Serial No. I402417 filed by the same Applicant. In the disclosure, a controllable fan is disposed on a throttle, and the fan speed is controlled by an accelerator sensor when the accelerator pedal is pressed. Therefore, air fill rate can be increased, thus air-fuel ratio can also be increased, and the improved inner combustion engine can be started even in the environment having thin air. However, it is not always required to increase the air flow. Therefore, it still needs an inner combustion engine that can precisely control the air flow.

### SUMMARY

According to one aspect of the present disclosure, an intake manifold having variable diameters is provided. The intake manifold includes a tube body and a valve. The valve is rotatably disposed in the tube body, wherein the valve is a hollow-ring and includes an outer circumference and an inner circumference, and a gradient curve surface is formed from the outer circumference to the inner circumference; wherein the inner circumference defines a inlet face, and a gradually varied angle is formed between normal vector of the inlet face and a cross section at an end of the tube body while the valve rotates.

In one example, the angle is ranged from 0 degrees to 90 degrees. The intake manifold can further include a motor for controlling angle variation while the valve rotates, where the motor can be a stepper motor or a servo motor.

According to another aspect of the present disclosure, an intake manifold having variable diameters is provided. The intake manifold includes a tube body and a valve. The valve is composed of two hollow rings, wherein the two hollow rings overlaps along a central axis of the tube body and relatively rotates around the central axis, each of the hollow rings comprises an inner circumference and an outer circumference, a plurality of air holes having corresponded positions are formed between each of the inner circumference and each of the outer circumference, and each of the inner circumference defines a inlet face. When the two hollow rings relatively rotate to a first position, the air holes of the two hollow rings are overlapped and through with each other; when the two hollow rings relatively rotate to a second position, the air holes of the two hollow rings are partially blocked with each other; and when the two hollow rings relatively rotate to a third position, the air holes of the two rings are completely blocked with each other.

In one example, a through hole is formed in a side wall of each of the hollow rings. The through hole is located between each two air holes.

In one example, the intake manifold can includes a guiding groove, and a rod is located in the through hole and is corresponded to the guiding groove, the hollow rings are moved along the guiding groove by the rod, and the hollow rings relatively rotate around the central axis of the tube body.

In one example, the intake manifold can further include a motor for controlling angle variation while the valve rotates, where the motor can be a stepper motor or a servo motor.

### BRIEF DESCRIPTION OF THE DRAWINGS

The present disclosure can be more fully understood by reading the following detailed description of the embodiment, with reference made to the accompanying drawings as follows:
Fig. 1 is a schematic view showing an intake manifold having variable diameters according to one embodiment of the present disclosure;
Fig. 2 is a schematic view showing the structure of the valve in Fig. 1;
Fig. 3 is a schematic view showing an operation of the valve in Fig. 1;
Fig. 4 is a schematic view showing an intake manifold having variable diameters according to another embodiment of the present disclosure;
Fig. 5 is a schematic view showing the structure of the valve in Fig. 4;
Fig. 6 is a schematic view showing the valve in Fig. 4 located in a first position;
Fig. 7 is a schematic view showing the valve in Fig. 4 located in a second position; and
Fig. 8 is a schematic view showing the valve in Fig. 4 located in a third position.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or similar parts.

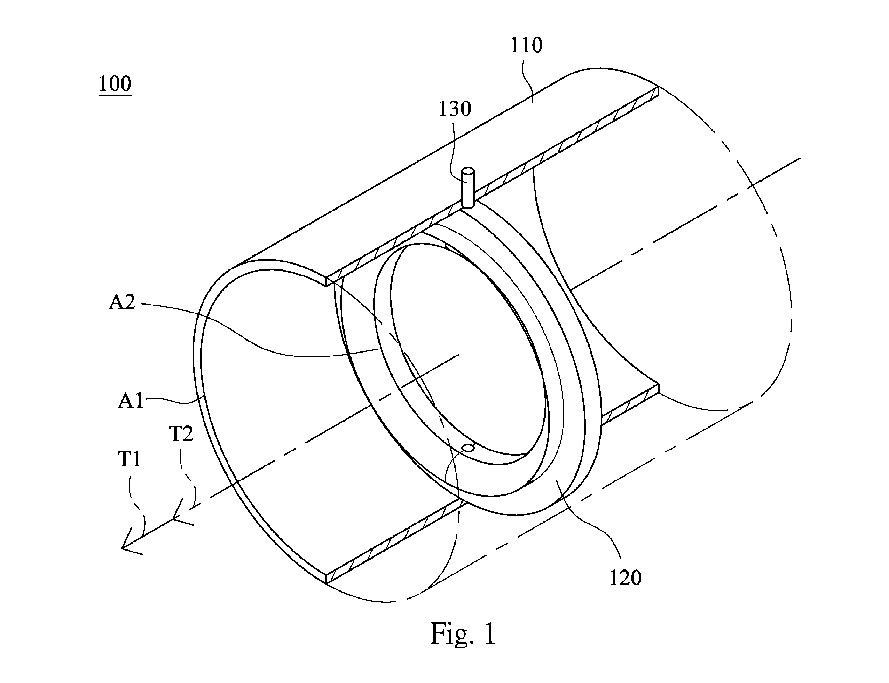

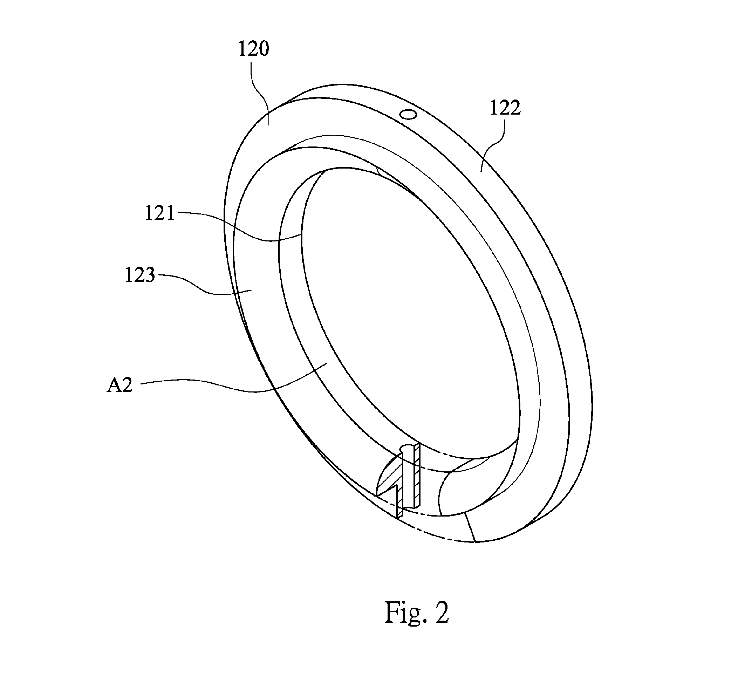

Fig. 1 is a schematic view showing an intake manifold 100 having variable diameters according to one embodiment of the present disclosure; and Fig. 2 is a schematic view showing the structure of the valve 120 in Fig. 1

The intake manifold 100 having variable diameters includes a tube body 110 and a valve 120. The valve 120 is rotatably disposed in the tube body 110. In one example, the valve 120 is a hollow ring and has an outer circumference 122 and an inner circumference 121.

A gradient curve surface 123 is formed from the outer circumference 122 to the inner circumference 121 of the valve 120. The inner circumference 121 defines an inlet face A2, the inlet face A2 is for passing through the outer air. When the outer air flows through the arc of the gradient curve surface 123, a smoother variation can be achieved.

A gradually varied angle θ is formed between a normal vector T2 of the inlet face A2 of the valve 120 and a normal vector T1 of a cross section A1 at an end of the tube body 110.

For making the valve 120 rotatable in the tube body 110, two rods 130 are disposed on outer sides of the valve 120. The two rods 130 are pivotally connected to two opposite outer sides of the valve 120 and defines an axis. The valve 120 can rotate along the axis defined by the two rods 130.

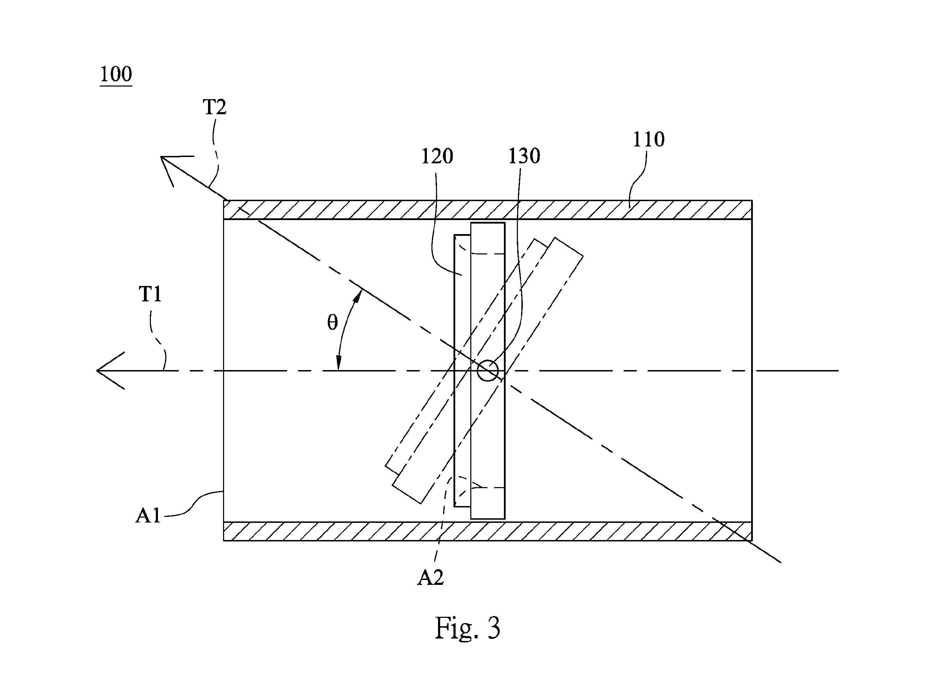

Fig. 3 is a schematic view showing an operation of the valve 120 in Fig. 1. When the valve 120 is not disposed, the air only passes through the tube body 110 with only one diameter. At the time, the air flow is determined by an area of the cross section A1 of the tube body 110, and the area is constant. When the valve 120 is disposed, the inlet face A2 of the valve 120 can allow the air to pass through. The valve 120 is rotatable, thus the angle θ can be varied from 0 degrees to 90 degrees with the rotation of the valve 120.

When the angle θ is 0 degrees, the inlet face A2 is parallel to the cross section A1. Since the area of the inlet face A2 is smaller than the area of the cross section A1, the air flow is determined by the inlet face A2, thereby reaching a minimum value.

When the angle θ is 90 degrees, the inlet face A2 is perpendicular to the cross section A1. Therefore, the air flow is not blocked by the valve 120 and is determined by the cross section A1, thereby reaching a maximum value.

In the aforementioned embodiments, the angle θ can be controlled to be varied from 0 degrees to 90 degrees, thus the air flow can be precisely controlled. Compared to the conventional intake manifold having only single diameter, the intake manifold 100 of the present disclosure utilizes the valve 120 to form variable diameters, thereby obtaining precise adjustment of the air flow.

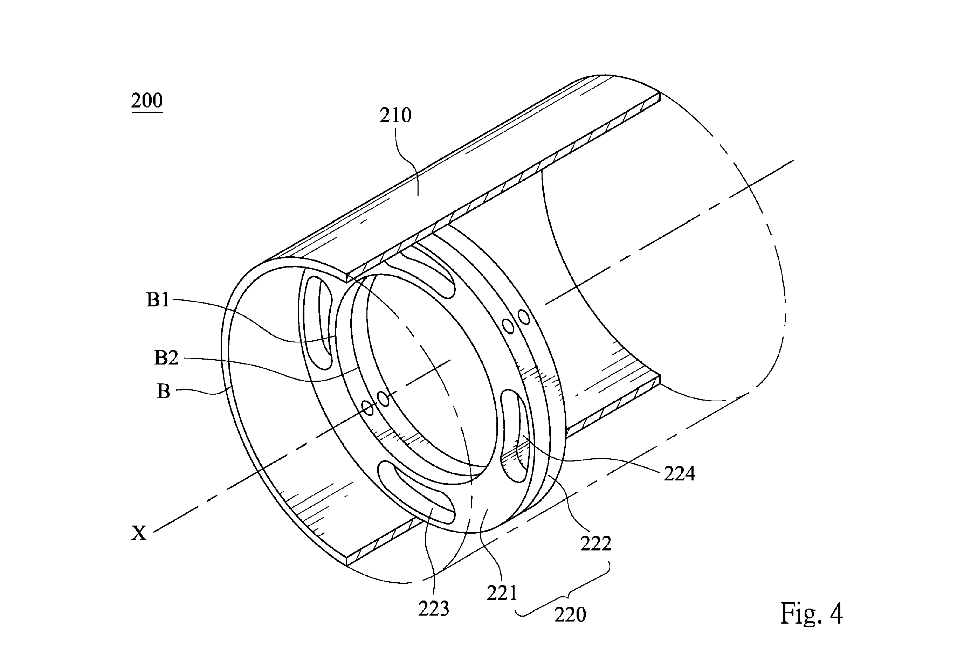

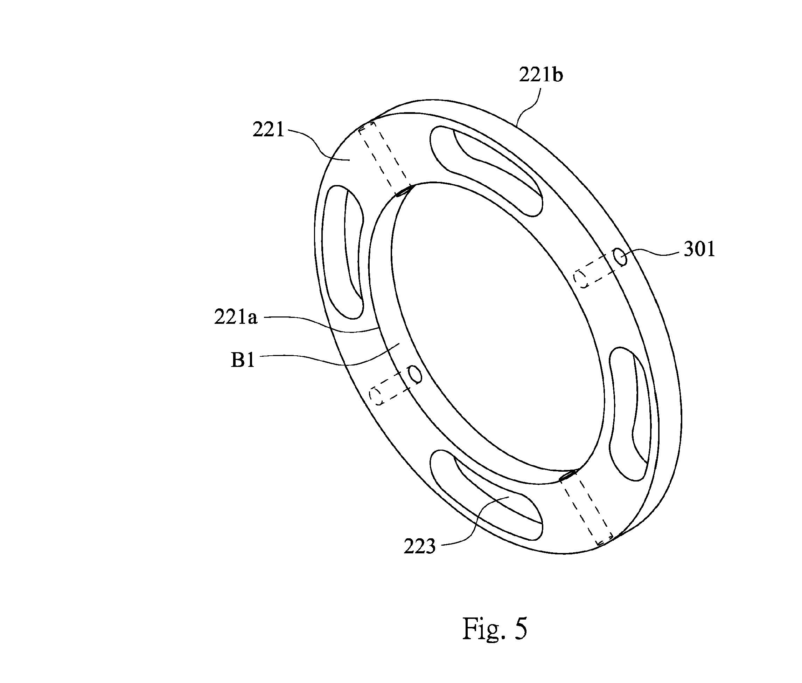

Fig. 4 is a schematic view showing an intake manifold 200 having variable diameters according to another embodiment of the present disclosure; Fig. 5 is a schematic view showing the structure of the valve 220 in Fig. 4.

The intake manifold 200 includes a tube body 210 and a valve 220. The valve 220 is composed of at least two hollow rings 221, 222. It should be mentioned that the number of the hollow rings are more than two, but not limited to two.

The hollow rings 221, 222 are overlapped along a central axis X, and can rotate relatively around the central axis X. The hollow ring 221 and the hollow ring 222 have similar structures, thus the hollow ring 221 is taken as an example for description. The hollow ring 221 includes an inner circumference 221a and an outer circumference 221b. An air hole 223 is formed between the inner circumference 221a and the outer circumference 221b. An inlet face B1 is defined by the inner circumference 221a.

In one example, a through hole 301 is formed on the side wall of each of the hollow rings 221, 222, and the tube body 210 has a guiding groove (not shown). A rod (not shown) disposed through the through hole 301, and the hollow rings 221, 222 are moved along the guiding groove by the rod. Therefore, the hollow rings 221, 222 can relatively rotate around the central axis X.

The hollow ring 222 has similar structures as the hollow ring 221. An air hole 224 is formed on the hollow ring 222 and an inlet face B2 is defined. In a prefer embodiment of the present disclosure, the area of the inlet face B1 is equal to the area of the inlet face B2, and the area and the shape of the air hole 223 is equal to that of the air hole 224. The areas and the shapes of the aforementioned inlet face B1, B2 and air holes 223, 224 are not limited, and it can be varied with different situations.

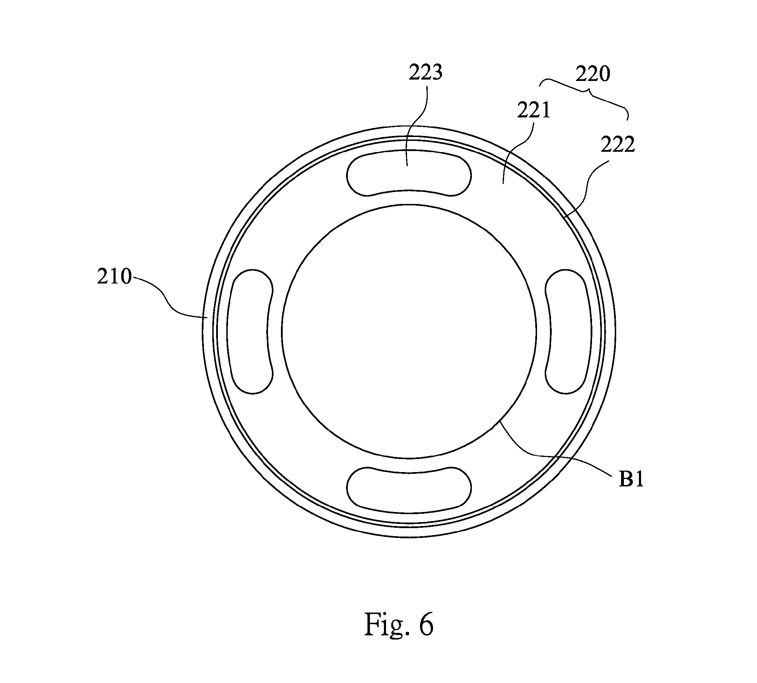

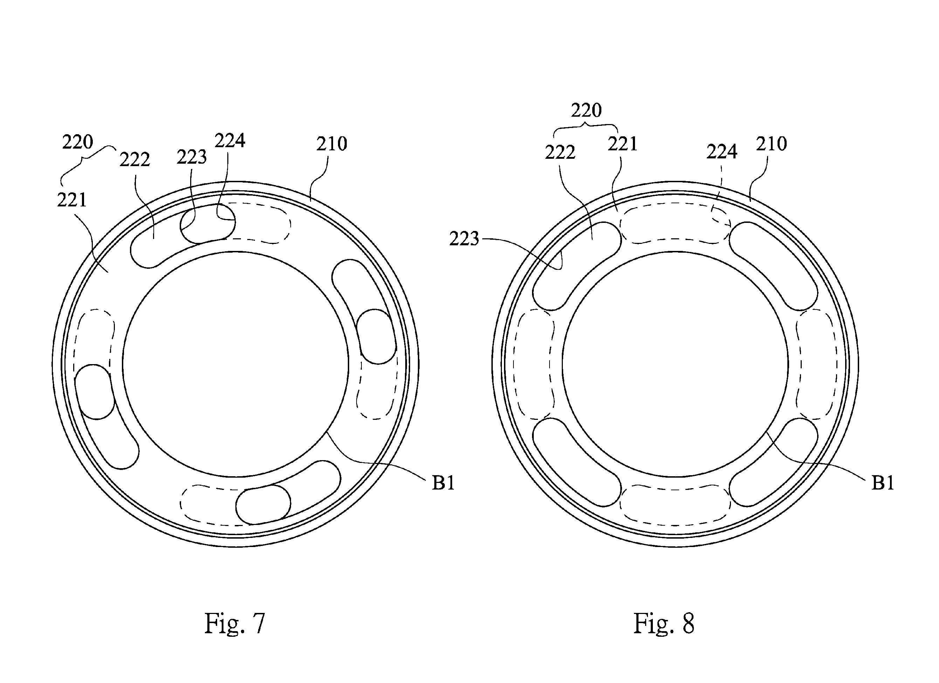

Fig. 6 is a schematic view showing that the valve 220 in Fig. 4 located in a first position; Fig. 7 is a schematic view showing that the valve 220 in Fig. 4 located in a second position; and Fig. 8 is a schematic view showing that the valve 220 in Fig. 4 located in a third position.

When the valve 220 is not disposed, the air only passes through the tube body 210 with only one size of diameter. At the time, the air flow is determined by an area of the cross section B of the tube body 210, and the area is constant. When the valve 220 is disposed, the inlet faces B1, B2 of the hollow rings 221, 222 can allow the air to pass through. Therefore, the air flow is determined by the areas of the inlet faces B1, B2 and the areas of the air holes 223, 224.

It have been mentioned that the hollow rings 221, 222 can rotate relatively around the central axis X, and in a prefer embodiment of the present disclosure, the area of the inlet face B1 is equal to the area of the inlet face B2, and the area and the shape of the air hole 223 is equal to that of the air hole 224. Therefore, the following situations will occur.

In Fig, 6, the valve 220 is located in a first position. At the time, the air hole 223 of the hollow ring 221 and the air hole 224 of the hollow ring 222 are totally overlapped. The air flow is determined by the area of the inlet face B1 (equal to the area of the inlet face B2) and the area of the air hole 223 (equal to the area of the air hole 224), and reaching a minimum value.

In Fig. 7, the valve 220 is located in a second position. At the time, the air hole 223 of the hollow ring 221 and the air hole 224 of the hollow ring 222 are partially overlapped. The air flow is determined by partial area of the inlet face B1 (equal to the area of the inlet face B2) and partial area of the air hole 223 (equal to the area of the air hole 224). When in the second position, the air flow is larger than in the first position.

In Fig. 8, the valve 220 is located in a third position. At the time, the air hole 223 of the hollow ring 221 and the air hole 224 of the hollow ring 222 are totally separated. The air flow is determined by the area of the inlet face B1 (equal to the area of the inlet face B2) and the area of the air hole 223 (equal to the area of the air hole 224). When in the third position, the air flow is larger than in the first and the second position, and reaching a maximum value.

By the aforementioned embodiments, when the hollow rings 221, 222 relatively rotate, the air flow can be precisely controlled by overlapping the air hole 223 and the air hole 224. Compared to the conventional intake manifold having diameter with one size, the intake manifold 200 of the present disclosure utilizes the valve 220 to form variable diameters, thereby obtaining precision adjustment of the air flow.

In the aforementioned embodiments, the operation of the valves 120, 220 can be controlled by a motor. The motor can be a stepper motor or a servo motor. Furthermore, the motor can be controlled by a sensor of an accelerator pedal or an ECU (Electronic Control Unit) of a vehicle.

To sum up, the variable diameters of the intake manifold is formed by disposing the valve having variable areas in the tube body. Therefore, when an engine is operated at low speed, the diameter can be reduced by controlling the area of the valve, thus the intake resistance can be increased, and the engine torque can be kept; when the engine is operated at high speed or a large amount of are is required, the air flow can be increased by controlling the area of the valve, thus the engine power can be increased.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. An intake manifold (100) having variable diameters, the intake manifold (100) comprising:
a tube body (110); and
a valve (120) rotatably disposed in the tube body (110), wherein the valve (120) is a hollow-ring and comprises an outer circumference (122) and an inner circumference (121), and a gradient curve surface (123) is formed from the outer circumference (122) to the inner circumference (121);
wherein the inner circumference (121) defines a inlet face (A2), and a gradually varied angle (θ) is formed between a normal vector (T2) of the inlet face (A2) and a cross section (A1) at an end of the tube body (110) while the valve (120) rotates.

2. The intake manifold (100) of claim 1, wherein the angle (θ) is ranged from 0 degrees to 90 degrees.

3. The intake manifold (100) of claim 2, further comprising a motor for controlling angle variation while the valve (120) rotates.

4. The intake manifold (100) of claim 3, wherein the motor is a stepper motor or a servo motor.

5. An intake manifold (200) having variable diameters, the intake manifold (200) comprising:
a tube body (210); and
a valve (220) composed of two hollow rings (221, 222), wherein the two hollow rings (221, 222) overlaps along a central axis (X) of the tube body (210) and relatively rotates around the central axis (X), each of the hollow rings (221, 222) comprises an inner circumference (221a) and an outer circumference (221b), a plurality of air holes (223, 224) having corresponded positions are formed between each of the inner circumference (221a) and each of the outer circumference (221b), and each of the inner circumference (221a) defines a inlet face (B1, B2);
wherein when the two hollow rings (221, 222) relatively rotate to a first position, the air holes (223, 224) of the two hollow rings (221, 222) are overlapped and through with each other; when the two hollow rings (221, 222) relatively rotate to a second position, the air holes (223, 224) of the two hollow rings (221, 222) are partially blocked with each other; and when the two hollow rings (221, 222) relatively rotate to a third position, the air holes (223, 224) of the two rings (221, 222) are completely blocked with each other.

6. The intake manifold (200) of claim 5, wherein a through hole (301) formed in a side wall of each of the hollow rings (221, 222).

7. The intake manifold (200) of claim 6, wherein the through hole (301) is located between each two air holes (223, 224).

8. The intake manifold (200) of claim 7, wherein the tube body (210) comprises a guiding groove, and a rod is located in the through hole (301) and is corresponded to the guiding groove, the hollow rings (221, 222) are moved along the guiding groove by the rod, and the hollow rings (221, 222) relatively rotate around the central axis (X) of the tube body (210).

9. The intake manifold (200) of claim 8, further comprising a motor for controlling the valve (220) and rotating the hollow rings (221, 222).

10. The intake manifold (200) of claim 9, wherein the motor is a stepper motor or a servo motor.
